# EUROPEAN PATENT SPECIFICATION

(11) **EP 3 034 401 B1**
(45) Date of publication and mention of the grant of the patent: **04.10.2017**
(21) Application number: 14197937.7
(22) Date of filing: 15.12.2014
(51) Int. Cl.: B64D 11/00

(54) **A lift apparatus for an aircraft and an aircraft including the lift apparatus**
Aufzugsvorrichtung für ein Flugzeug und Flugzeug mit der Aufzugsvorrichtung
Appareil de levage pour aéronef et aéronef comprenant ledit appareil

(43) Date of publication of application: 22.06.2016
(73) Proprietor: Airbus Operations GmbH, 21129 Hamburg (DE)
(72) Inventor: Roth, Ingo, 21129 Hamburg (DE); Boos, Sassa Nadine, 22869 Schenefeld (DE); Stoldt, Arne, 22397 Hamburg (DE); Salvador, Sascha-Jay, 22529 Hamburg (DE)
(74) Representative: Bird & Bird LLP

(56) References cited:
- WO-A2-2013/136282
- GB-A- 2 131 779
- US-A- 5 475 949
- US-A- 5 535 852

## Description

The present application relates to a lift apparatus for an aircraft for transporting objects between a first compartment of an aircraft and a second compartment of an aircraft through an aperture in a floor structure separating the first compartment and the second compartment from each other, and to an aircraft in which such a lift apparatus is mounted.

Aircrafts typically comprise several distinct compartments separated from each other by wall structures. In particular, such compartments generally comprise compartments arranged one above the other and separated by a floor structure, for example a passenger compartment arranged above a cargo compartment or cargo bay. In this connection it may be desirable to utilize, process or handle objects in a first compartment, such as objects in a monument mounted in the upper compartment, but to store these objects in a second compartment, such as the lower compartment, prior to their use, processing or handling in order to maximize the space available in the first compartment.

In the case of the first or upper compartment being a passenger compartment storing such objects in the second or lower compartment provides the advantage of maximizing the space available for seating passengers, thereby increasing profitability and flexibility in selecting an optimum cabin arrangement. Further, in the case of the second or lower compartment being a cargo compartment the advantage is provided that loading the objects into the aircraft is facilitated and may be carried out in accordance with standard cargo loading procedures.

One particular example for this situation is a passenger compartment in which a monument is mounted which is an aircraft galley. Such galley is mounted on a floor structure in the passenger compartment of an aircraft, and the catering goods, such as food and beverages, are often loaded in boxes and/or trolleys into the aircraft and stored in a storage rack arrangement in the galley or in a separate storage rack arrangement located within the passenger compartment. Thus, in this case considerable passenger compartment space is wasted by a storage rack arrangement. It has, therefore, been suggested to dispense with the storage rack arrangement in the passenger compartment, and to utilize instead a storage rack arrangement located in the cargo compartment below the passenger compartment. In particular, such storage rack arrangement may e.g. be provided in a removable cargo container, which can be loaded into the cargo compartment together with other conventional cargo containers. Thus, boxes and trolleys with catering goods can advantageously be stored into the storage rack arrangement outside the aircraft.

In any case, it is necessary to provide for a lift apparatus for vertically lifting objects to be utilized, processed or handled in the upper compartment from the lower compartment, i.e. in a direction perpendicularly or transversely to the floor structure. For this purpose, an aperture is provided in a portion of the floor structure, typically below a monument in which or to which the lift apparatus is mounted. A manual or automatic means must be provided for placing objects to be lifted at a defined location in the lower compartment where they can be engaged or grabbed by the lift apparatus, or the lift apparatus must be movable in the horizontal direction, i.e. along the extension of the floor structure. In the example of a galley and the use of a storage rack arrangement in a cargo container an opening or aperture must also be provided in the upper wall portion of the container to allow for access of the lift apparatus to the boxes and/or trolleys stored inside the container.

Further, when providing an aperture in a floor structure between two compartments of an aircraft, due to safety considerations it is necessary to able to close the aperture. This is particularly the case if the two compartments have different safety classifications, such as a passenger compartment and a cargo compartment, because then the floor structure is required to provide a fire and smoke barrier in case of an emergency. In this regard it must also be taken into consideration that a cargo compartment of an aircraft will typically be flooded with Halon if a potential fire hazard is detected in the cargo compartment, but that the Halon must not enter the passenger compartment. Consequently, any means for closing the aperture must be constructed such that it acts as a fire and smoke barrier and as an airtight seal and the very high safety requirements in aircraft are met for various different scenarios.

For some specific applications, such as a crew rest container or a waste container being installed in the lower compartment, a manually movable cover or hatch is known. However, as a lift apparatus will typically be installed inside a monument or comprise a lift compartment inside the monument, which monument is installed immediately above the aperture, such manually movable covers may be difficult or impossible to use with a lift apparatus.

Automated cover arrangements always require additional mechanical or electrical components for the opening and closing of the aperture. For example, arrangements are known in which two flaps, one on each side of the aperture, are electrically moved towards and away from each other in order to close and open the aperture, respectively. Documents WO2013/136282 and GB2131779 relate to aircraft lift devices. It is therefore an object of the present invention to provide a lift apparatus of the above type, providing the possibility to selectively close an aperture in a simple, reliable and fail-safe manner.

This problem is solved by a lift apparatus as claimed in claim 1 and an aircraft as claimed in claim 10. Advantageous embodiments of the lift apparatus and the aircraft are the subject-matter of the respective dependent claims.

According to the present invention a lift apparatus is adapted for transporting objects, such as goods or boxes or trolleys including goods or other objects, e.g. catering goods, between a first compartment of an aircraft and a second compartment of an aircraft through an aperture in a floor structure separating the first compartment and the second compartment from each other.

The lift apparatus comprises a conveying means, which has a retaining portion adapted to selectively retain and release objects to be transported. For this purpose, the retaining portion may include an gripping means, which is operable to actively grip and release an object to be transported, or passive engagement or support means. For example, the retaining portion may include a support plate, on which an object to be transported can be disposed, and a coupling means coupling the support plate to the remainder of the conveying means.

The lift apparatus further comprises a guide means to which the conveying means is mounted such that it is linearly movable in a guided manner along a predetermined and preferably straight path of motion defined by the guide means. In other words, the conveying means is movable along the guide means, which defines the predetermined path of motion.

Moreover, the lift apparatus comprises moving means adapted for driving the conveying means to linearly move along the predetermined path of motion and along the guide means. The moving means may be or comprise at least one motor, such as, in particular, an electric motor, but may alternatively or additionally also be or comprise other means, such as pneumatic or hydraulic means. For controlling the operation of the moving means and, thus, the linear movement of the conveying means and the position of the conveying means along the guide means the lift apparatus may also comprise a control means adapted for effecting the control. For this purpose, it may be operatively coupled with the moving means by, e.g., a wired or wireless connection.

The conveying means further comprises a closing portion, wherein the retaining portion and the closing portion are disposed one after the other along the predetermined path of motion, i.e. along the direction defined by the guide means. Both the retaining portion and the closing portion move together with the remainder of the conveying means, i.e. the conveying means preferably moves as a whole or as a single unit or component along the predetermined path of motion. The lift apparatus is adapted to be mounted in an aircraft, which comprises a first compartment and a second compartment separated from each other by a floor structure having an aperture. More specifically, the lift apparatus is adapted - and in particular the closing portion and the retaining portion are arranged and dimensioned - so that the lift apparatus is mountable in such a manner that the predetermined path of motion extends through the aperture, and that the conveying means is selectively movable along the predetermined path of motion between a first position, in which - along the predetermined path of motion - the closing portion is spaced from the floor structure and the aperture and at least part of the retaining portion is disposed between the floor structure and the closing portion, and a second position, in which the closing portion closes the aperture. Preferably, in the mounted condition the predetermined path of motion extends perpendicularly with respect to the floor structure. Of course, such a lift apparatus is only operable if the aperture has such dimensions that at least part of the retaining portion is movable through the aperture (together with suitable objects to be transported), and that the closing portion cannot move through the aperture, but is rather operable to completely close the aperture. In other words, the construction of the lift apparatus determines with which types of aircraft and in particular which dimensions of apertures the lift apparatus can be used.

This construction provides the advantage that selectively closing the aperture is effected automatically and in a very simple manner when moving the conveying means into a predetermined position, and that no separate closing means involving additional electrical or mechanical components is required. In particular, not additional parts for actuating the closing mechanism are required. Due to the reduced parts count and complexity an improvement in terms of costs, easy of maintenance and reliability is achieved. In addition to being able to provide for a fire and smoke barrier in case of an emergency, the closing portion may also be adapted to serve as an efficient acoustic barrier, which is particularly important if one of the compartments is a passenger compartment.

It is to be noted that the above lift apparatus can be constructed to be mountable in an aircraft of the above type either in such a manner that in the first position the closing portion is located in the upper one of the first and second compartments and when moving towards the second position approaches the aperture from above, or in such a manner that in the first position the closing portion is located in the lower one of the first and second compartments and when moving towards the second position approaches the aperture from below.

Further, it is also possible and may be advantageous if the conveying means additionally comprises a further closing portion. Then, the closing portion mentioned previously constitutes a first closing portion and the further closing portion constitutes a second closing portion. The retaining portion is preferably disposed between the first and second closing portions along the predetermined path of motion, i.e. along the direction defined by the guide means. Both the retaining portion and the first and second closing portions move together with the remainder of the conveying means. In such an embodiment of the lift apparatus the first and second closing portions and the retaining portion are arranged and dimensioned so that the lift apparatus is mountable in the manner described in detail above, wherein in the first position the second closing portion closes the aperture and in the second position the second closing portion is spaced from the floor structure and the aperture and at least part of the retaining portion is disposed between the floor structure and the second closing portion. Apart from this the same considerations apply for both the first closing portion and the second closing portion, i.e. the preceding and the following explanations regarding the first closing portion also apply to the second closing portion.

This embodiment provides for two different positions of the conveying means in which the aperture is closed automatically and in a very simple manner by moving the conveying means into the respective predetermined position, without a need for separate closing means involving additional electrical or mechanical components. Thus, it is advantageously possible to arrange the lift apparatus in an aircraft of the above type such that in that both in the uppermost position of the conveying means, in which an object retained by the retaining portion is located in the upper one of the first and second compartments, and the lowermost position of the conveying means, in which an object retained by the retaining portion is located in the lower one of the first and second compartments, the aperture is closed.

In a preferred embodiment the closing portion comprises an annularly closed contact surface, which faces the retaining portion and is adapted to abut, in the mounted condition of the lift apparatus described above, an annularly closed portion of the floor structure surrounding the aperture when the conveying means is in the second position. Preferably, the contact surface, which may be a continuous surface or an annularly shaped surface extends perpendicularly with respect to the predetermined path of motion. In this embodiment the aperture is closed in a simple manner by the contact between the contact surface and annularly closed portion of the floor structure surrounding the aperture. The construction according to this embodiment has the consequence that a portion of the retaining portion adjacent or facing the closing portion or the entire retaining portion is disposed entirely inside an annularly closed circumferential edge region of the contact surface, when viewed along the predetermined path of motion.

In a preferred embodiment the closing portion is or comprises a plate-shaped element which extends in a plane which is perpendicular to the predetermined path of motion.

In a preferred embodiment the retaining portion comprises a gripping means which is adapted for selectively gripping and releasing objects to be transported. The gripping means may be configured to be operable manually or by automatic means.

In a preferred embodiment the closing portion comprises a sealing arrangement which is adapted to provide an airtight seal and/or a fire barrier when the closing portion closes an aperture in a floor structure in the manner described above when the lift apparatus is mounted in an aircraft. For example, the sealing arrangement may comprise one or more suitable sealing rings fixedly secured to the closing portion. It should be noted that in case of the above embodiment, in which the closing portion comprises a contact surface, the sealing arrangement, such as one or more sealing rings, is regarded as constituting or forming part of the contact surface. Additionally or alternatively, a sealing arrangement may also be included in the floor structure of an aircraft, such as in an annularly closed region of the floor structure surrounding the aperture. Such sealing arrangement forming part of the floor structure must be arranged in such a manner that it is contacted by the closing portion when the closing portion closes the aperture.

In a preferred embodiment the lift apparatus further comprises a frame defining an aperture and adapted to be mounted in an opening in a floor structure separating a first compartment and a second compartment of an aircraft from each other. In the mounted condition the frame then constitutes a part of the floor structure and defines the aperture in the floor structure referred to above, i.e. the aperture of the frame is then the above-mentioned aperture in the floor structure. The aperture is dimensioned such that the above considerations apply. In particular, it is preferred that the aperture of the frame has smaller dimensions than the closing portion such that the closing portion is movable into a position in which the closing portion abuts an annularly closed portion of the floor structure surrounding the aperture, thereby closing the aperture. Further, a seat, in particular an annular recessed region surrounding the aperture, may be provided in the frame, which seat is adapted for receiving the closing portion or a portion of the closing portion. The frame may also comprise a sealing arrangement as mentioned above, which may be the only sealing arrangement or cooperate with a sealing arrangement on the closing portion.

In a preferred embodiment the lift apparatus further comprises a monument which comprises a straight elongate cavity open at one of its longitudinal ends towards the exterior of the monument and defining a longitudinal axis. The guide means is mounted to the monument, such as to interior walls of the monument defining the cavity. The conveying means is disposed at least partially inside the cavity, and the lift apparatus is adapted for transporting objects from outside the monument along the longitudinal axis of the cavity through its open end into the cavity. In accordance with the above explanations, the monument, which may, e.g., be a galley, is adapted to be mounted on a floor structure of an aircraft separating a first compartment and a second compartment of the aircraft from each other such that the longitudinal axis is oriented perpendicularly to the floor structure and the open end of the cavity is facing the floor structure, wherein the guide means and the predetermined path of motion extend parallel to the longitudinal axis of the cavity.

In a preferred embodiment the moving means comprises one or more drive means for driving the conveying means and one or more brake means adapted for selectively locking the conveying means in its position and releasing it to be movable by the one or more drive means. The one or more drive means may be or comprise electric, pneumatic and/or hydraulic devices, i.e. rely on electric, pneumatic and/or hydraulic power. The one or more drive means and the one or more brake means are adapted such that in the case of loss of power the one or more brake means are automatically released and the one or more drive means do not resist movement of the conveying means along the guide means under the influence of gravity. This construction provides the advantage that the lift apparatus is mountable in such a manner that the second (closing) position of the conveying means is the lowermost position, so that in case of loss of power the conveying means automatically moves to close the aperture under the influence of gravity.

In a preferred embodiment the guide means comprises two straight guide members which are spaced from each other. In case the lift apparatus comprises a monument as described above, each of the two guide members is preferably attached to or integrated into a different one of two spaced opposing wall portions of a sidewall arrangement defining the cavity and extending parallel to the longitudinal axis of the cavity. In any case, the conveying means comprises two conveying members, each mounted to a different one of the guide members such that they are linearly moveable along the respective guide member. The moving means is then, of course, adapted for driving the two conveying members to linearly move along the guide members, wherein the moving means includes at least one drive means for driving the two conveying members, i.e. moving them along the guide members. Preferably for each conveying member and guide member a separate drive means and a separate brake means are provided as well as a separate power unit for powering the drive means and the brake means. It is to be noted that the guide means may not only include exactly two of the above-described guide members, but that embodiments may also be advantageous in which the guide means comprises three or more of the above-described guide members. Then, the conveying means comprises a corresponding number or at least a corresponding number of the above-described conveying members, each mounted to a different one of the guide members such that they are linearly moveable along the respective guide member.

As already explained in detail above, the lift apparatus of any of the above-mentioned embodiments is specifically adapted to be mounted in an aircraft comprising a first compartment, a second compartment, and a floor structure separating the first and second compartments from each other and having an aperture. Therefore, the present invention also relates to such an aircraft comprising a lift apparatus according to any of the preceding embodiments. The lift apparatus is mounted in the aircraft in one of the manners already described in detail above, i.e. in particular such that the predetermined path of motion extends through the aperture between the first compartment and the second compartment, so that by moving the conveying means along the predetermined path of motion a portion of the conveying means can be moved through the aperture. The aperture has smaller dimensions than the closing portion, so that the closing portion is able to completely cover and close the aperture, and the conveying means and guide means are adapted and arranged to enable transport of objects through the aperture between the first and second compartments while the objects are retained by the retaining portion. The conveying means is movable along the predetermined path of motion between a first position, in which the closing portion is spaced from the floor structure and the aperture and at least part of the retaining portion is disposed between the floor structure and the closing portion, and a second position, in which the closing portion closes the aperture. The second position advantageously constitutes an end position of the predetermined path of motion, wherein the closing portion and the aperture cooperate as stop means.

In case the lift apparatus is of the above-described construction comprising in addition to the first closing portion a second closing portion, the aperture has also smaller dimensions than the second closing portion, so that the second closing portion is likewise able to completely cover and close the aperture. As explained in detail above, in the second position the second closing portion is spaced from the floor structure and the aperture and at least part of the retaining portion is disposed between the floor structure and the second closing portion, and in the first position the second closing portion closes the aperture. In this embodiment the first position advantageously likewise constitutes an end position of the predetermined path of motion, wherein the second closing portion and the aperture cooperate as stop means. Then, the lift apparatus is advantageously arranged such that both in the uppermost of the first and second positions, in which an object retained by the retaining portion is located in the upper one of the first and second compartments, and the lowermost of the first and second positions, in which an object retained by the retaining portion is located in the lower one of the first and second compartments, the aperture is closed. Of course, this necessitates suitable dimensions of the object to be transported. In particular, the object must be arranged between the first and second closing portions.

In a preferred embodiment of the aircraft, the first and second compartments have different classifications. Preferably, the first compartment is a passenger compartment and the second compartment is a cargo compartment.

In a preferred embodiment of the aircraft the second position is the lowest possible position of the conveying means along the predetermined path of motion, i.e. the lower end position. It is particularly preferred if the moving means is adapted such that in case of loss of power the conveying means moves into the second position or is maintained in the second position under the influence of gravity. For this purpose, the above-described embodiment of a lift apparatus, in which the moving means comprises one or more drive means and one or more brake means may be advantageously utilized.

In a preferred embodiment of the aircraft the closing portion and the floor structure comprise cooperating locking means for selectively mechanically locking the closing portion in the second position.

In the following an exemplary embodiment of the invention will be described in more detail with reference to the figures.
Figure 1 shows a schematic perspective view of a lift apparatus according to the present invention installed in an aircraft, wherein the lift apparatus is in a position in which an aperture in a floor structure of the aircraft is open.
Figure 2 shows a schematic perspective view of the lift apparatus of Figure 1, wherein the lift apparatus is in a position in which the aperture in the floor structure of the aircraft is closed.

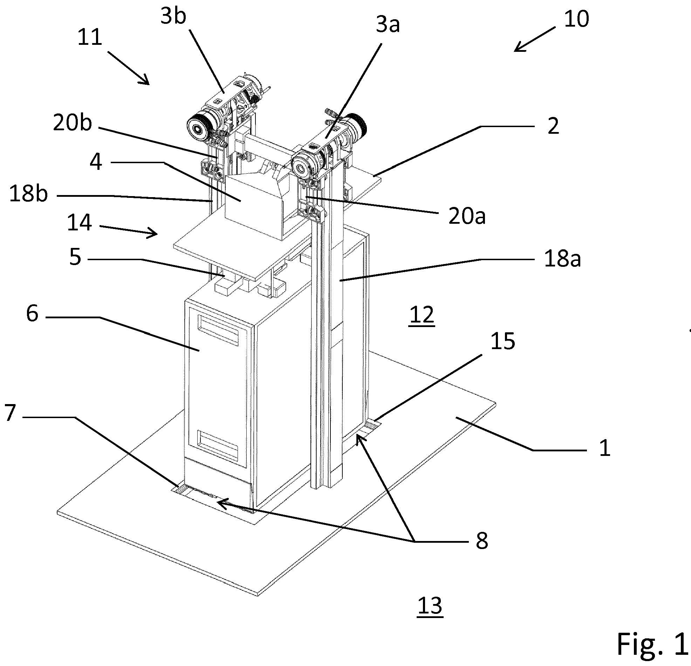

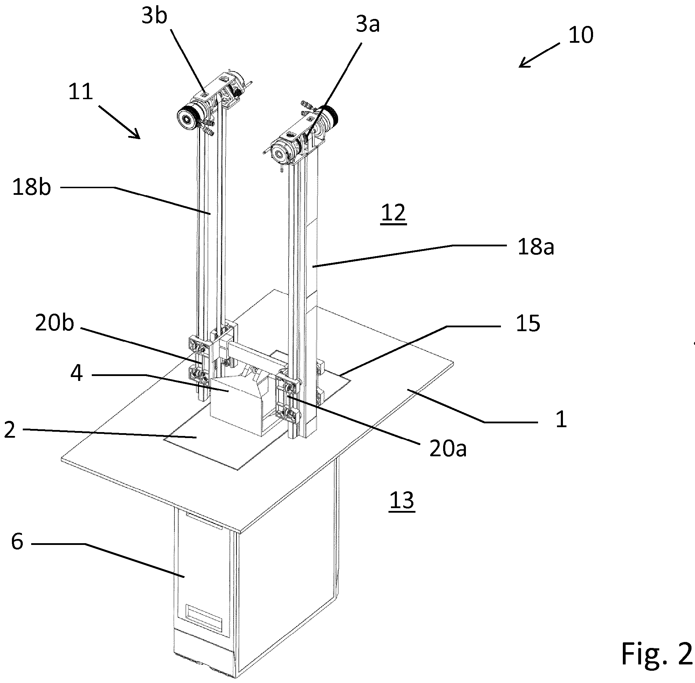

The aircraft 10 shown in Figures 1 and 2 in a perspective view comprises a lift apparatus 11 and a floor structure 1, in which a rectangular aperture 8 is provided. It is to be noted that of the aircraft 10 only the lift apparatus 11 and the floor structure 1 are shown in detail. The floor structure 1 separates a passenger compartment 12 and a cargo compartment 13 from each other.

Inside the passenger compartment 12 the lift apparatus 11 is mounted on the floor structure 1 such that the lift apparatus is arranged immediately above and aligned with the aperture 8. Typically, the lift apparatus 11 will be mounted inside a lift compartment of a monument, such as a galley, mounted to the floor structure 1 inside the passenger compartment 12. The lift apparatus 11 is operable for vertically transporting an object 6, such as a box, through the aperture 8 in the floor structure 1 between the first position shown in Figure 1, in which the object 6 is disposed inside the passenger compartment 12, and the second position shown in Figure 2, in which the object 6 is disposed inside the cargo compartment 13.

The lift apparatus 11 comprises two straight bar-shaped guide rails or masts 18a, 18b which are mounted such that they are oriented perpendicularly with respect to the floor structure 1 and a plane in which the aperture 8 extends. The guide rails 18a, 18b may e.g. be mounted to two opposing sidewalls of a lift compartment. The guide rails 18a, 18b are disposed on opposite sides of the aperture 8, i.e. at an angular distance of 180° with respect to a longitudinal axis of the aperture 8.

The lift apparatus 11 further comprises two conveying members 20a, 20b, each mounted to a different one of the guide rails 18a, 18b in such a manner that they are linearly movable along the guide rails 18a, 18b in a guided manner, i.e. in a direction perpendicular to the plane defined by the floor structure 1 and the aperture 8. The conveying members 20a, 20b constitute carriages which are secured and guided by the guide rails 18a, 18b and are able to move along the guide rails 18a, 18b. They are arranged on two opposite sides of the aperture 8 in the floor structure 1. The guide rails 18a, 18b define a predetermined path of motion.

For effecting the linear movement of the conveying members 20a, 20b two drive units 3a, 3b, which comprise electrical motors and brakes, are provided which move the conveying members 20a, 20b and are synchronized by a suitable control means for the two conveying members 20a, 20b to always be at the same height above the floor structure 1 and to always move at the same speed. The drive units 3a, 3b may be adapted and arranged to move the conveying members 20a, 20b e.g. via means such as belts (not shown) or rotating spindles (not shown).

As shown in the Figures, a compensation unit 4 is secured to the conveying members 20a, 20b such that it is arranged between them. Further, a cover plate 2 is rigidly secured to the compensation unit 4, and a gripping device 5 for selectively gripping and holding the respective object 6 to be lifted is mounted below the cover plate 2. The compensation unit 4 is constructed and coupled to the conveying members 20a, 20b in such a manner that a relative rotational movement between the conveying members 20a, 20b on the one hand and the cover plate 2 and gripping device 5 on the other hand about three perpendicular axes is possible. In this manner a jamming of the lift apparatus 11 can be avoided. The conveying members 20a, 20b, the compensation unit 4, the cover plate 2 and the gripping device 5 in combination constitute a conveying means 14, which moves as a whole along the predetermined path of motion defined by the guide rails 18a, 18b.

The dimensions and relative arrangement of the cover plate 2 and the gripping device 5 are such that, when viewed from above, the gripping device 5 does not extend beyond the outer circumferential edge of the cover plate 2 and the gripping device 5 is located inside a region located inside an annularly closed circumferential edge region of the cover plate 2. Thus, on its lower surface, which faces the gripping device 5, the cover plate 2 comprises an annularly closed circumferentially extending contact surface into which the gripping device 5 does not extend when viewed from above. Further, the shape and dimensions of the cover plate 2 correspond to a recessed portion 15 of the floor structure 1, in which recessed portion 15 the aperture 8 is provided. The dimensions of the aperture are slightly smaller than the dimensions of the recessed portion 15, such that an annularly closed circumferentially extending support surface 7 is provided as part of the floor structure 1 and surrounding the aperture 8. The support surface 7 and/or the contact surface of the cover plate 2 comprise suitable sealing means.

Due to the above construction, by moving the conveying members 20a, 20b the gripping device 5 can be linearly moved from the position shown in Figure 1 through the aperture 8 into the position inside the cargo compartment 13 shown in Figure 2 and vice versa, while gripping and retaining an object 6 to be transported. In each of the two positions the gripping device 5 can be operated to selectively release and grip the object 6, as desired. In the position shown in Figure 1, in which the conveying means 14 is located in the uppermost position along the predetermined path of motion and the aperture 8 is open with the object 6 being located immediately above the open aperture 8. Importantly, when moving the conveying means 14 into the position shown in Figure 2 the contact surface of the cover plate 2 abuts the support surface 7 surrounding the aperture 8, thereby sealingly closing the aperture 8.

Thus, closing the aperture 8 is automatically effected with the normal movement of the conveying means 14 into the lowermost position, in which the gripping device 5 is disposed inside the cargo compartment 13. Advantageously the drive units 3a, 3b are constructed such that in case of loss of electric power the conveying means 14 automatically moves into the position of Figure 2 under the influence of gravity, thereby closing the aperture 8.

## Claims

1. A lift apparatus for transporting objects (6) between a first compartment (12) of an aircraft (10) and a second compartment (13) of the aircraft (10) through an aperture (8) in a floor structure (1) separating the first compartment (12) and the second compartment (13) from each other, the lift apparatus (11) comprising:
- a conveying means (14) comprising a retaining portion (5) adapted to selectively retain and release objects (6) to be transported,
- a guide means (18a, 18b) to which the conveying means (14) is mounted such that it is linearly movable in a guided manner along a predetermined path of motion defined by the guide means (18a, 18b), and
- a moving means adapted for driving the conveying means (14) to linearly move along the predetermined path of motion,
wherein the conveying means (14) further comprises a closing portion (2), the retaining portion (5) and the closing portion (2) are disposed one after the other along the predetermined path of motion, the lift apparatus (11) is adapted to be mounted in an aircraft (10), which comprises a first compartment (12) and a second compartment (13) separated from each other by a floor structure (1) having an aperture (8), in such a manner that the predetermined path of motion extends through the aperture (8), and wherein the conveying means (14) is selectively movable along the predetermined path of motion between a first position, in which the closing portion (2) is spaced from the floor structure (1) and the aperture (8) and at least part of the retaining portion (5) is disposed between the floor structure (1) and the closing portion (2), and a second position, in which the closing portion (2) closes the aperture (8).

2. The lift apparatus according to claim 1, wherein the closing portion (2) comprises an annularly closed contact surface, which faces the retaining portion (5) and is adapted to abut, in the mounted condition of the lift apparatus (11), an annularly closed portion of a floor structure (1) surrounding the aperture (8) when the conveying means (14) is in the second position.

3. The lift apparatus according to claim 1 or claim 2, wherein the closing portion is or comprises a plate-shaped element (2) which extends in a plane which is perpendicular to the predetermined path of motion.

4. The lift apparatus according to any of the preceding claims, wherein the retaining portion (5) comprises a gripping means (5) which is adapted for selectively gripping and releasing objects (6) to be transported.

5. The lift apparatus according to any of the preceding claims, wherein the closing portion (2) comprises a sealing arrangement which is adapted to provide an airtight seal and/or a fire barrier when the closing portion (2) closes an aperture (8) in a floor structure (1).

6. The lift apparatus according to any of the preceding claims, further comprising a frame defining an aperture (8) and adapted to be mounted in an opening in a floor structure (1) separating a first compartment (12) and a second compartment (13) of an aircraft (10) from each other, wherein the aperture (8) of the frame has smaller dimensions than the closing portion (2) such that the closing portion (2) is movable into a position in which the closing portion (2) abuts an annularly closed portion of the floor structure (1) surrounding the aperture (8), thereby closing the aperture (8).

7. The lift apparatus according to any of the preceding claims, further comprising a monument comprising a straight elongate cavity open at one of its longitudinal ends towards the exterior of the monument and defining a longitudinal axis, wherein the guide means (18a, 18b) is mounted to the monument, the conveying means (14) is disposed at least partially inside the cavity, and the lift apparatus (11) is adapted for transporting objects (6) from outside the monument along the longitudinal axis of the cavity through its open end into the cavity, wherein the monument is adapted to be mounted on a floor structure (1) of an aircraft (10) separating a first compartment (12) and a second compartment (13) of the aircraft (10) from each other such that the longitudinal axis is oriented perpendicularly to the floor structure (1) and the open end of the cavity is facing the floor structure (1), wherein the guide means (18a, 18b) and the predetermined path of motion extend parallel to the longitudinal axis of the cavity.

8. The lift apparatus according to any of the preceding claims, wherein the moving means comprises at least one drive means (3a, 3b) for driving the conveying means (14) and at least one brake means (3a, 3b) adapted for selectively locking the conveying means (14) in its position and releasing it to be movable by the at least one drive means (3a, 3b), wherein the at least one drive means (3a, 3b) and the at least one brake means (3a, 3b) are adapted such that in the case of loss of power the at least one brake means (3a, 3b) is automatically released and the at least one drive means (3a, 3b) does not resist movement of the conveying means (14) along the guide means (18a, 18b) under the influence of gravity.

9. The lift apparatus according to any of the preceding claims, wherein
- the guide means comprises two or more straight guide members (18a, 18b) which are spaced from each other, and
- the conveying means (14) comprises two or more conveying members (20a, 20b), one for each of the guide members (18a, 18b) and each mounted to a different one of the guide members (18a, 18b) such that they are linearly moveable along the respective guide member (18a, 18b).

10. An aircraft (10) comprising:
a first compartment (12),
a second compartment (13),
a floor structure (1) separating the first and second compartments (12, 13) from each other and having an aperture (8), and
a lift apparatus (11) according to any of the preceding claims, wherein
- the lift apparatus (11) is mounted in the aircraft (10) such that the predetermined path of motion extends through the aperture (8) between the first compartment (12) and the second compartment (13),
- the aperture (8) has smaller dimensions than the closing portion (2), so that the closing portion (2) is able to completely cover and close the aperture (8), and the conveying means (14) and guide means (18a, 18b) are adapted and arranged to enable transport of objects (6) through the aperture (8) between the first and second compartments (12, 13) while the objects (6) are retained by the retaining portion (5), and
- the conveying means (14) is movable along the predetermined path of motion between a first position, in which the closing portion (2) is spaced from the floor structure (1) and the aperture (8) and at least part of the retaining portion (5) is disposed between the floor structure (1) and the closing portion (2), and a second position, in which the closing portion (2) closes the aperture (8).

11. The aircraft according to claim 10, wherein the first compartment (12) is a passenger compartment and the second compartment (13) is a cargo compartment.

12. The aircraft according to claim 10 or claim 11, wherein the second position is the lowest possible position of the conveying means (14) along the predetermined path of motion.

13. The aircraft according to claim 12, wherein the moving means is adapted such that in case of loss of power the conveying means (14) moves into the second position or is maintained in the second position under the influence of gravity.

14. The aircraft according to claim 13, wherein the lift apparatus (11) is a lift apparatus according to claim 8.

15. The aircraft according to any of claims 10 to 14, wherein the closing portion (2) and the floor structure (1) comprise cooperating locking means for selectively mechanically locking the closing portion (2) in the second position.

## Patentansprüche

1. Hebevorrichtung zum Transportieren von Objekten (6) zwischen einem ersten Bereich (12) eines Flugzeugs (10) und einem zweiten Bereich (13) des Flugzeugs (10) durch eine Öffnung (8) in einer Bodenstruktur (1), die den ersten Bereich (12) und den zweiten Bereich (13) voneinander trennt, wobei die Hebevorrichtung (11) aufweist:
- ein Beförderungsmittel (14), das einen Halteabschnitt (5) aufweist, der angepasst ist, um zu transportierende Objekte (6) wahlweise festzuhalten und freizugeben,
- ein Führungsmittel (18a, 18b), an dem das Beförderungsmittel (14) so befestigt ist, dass es in einer geführten Weise entlang einer durch das Führungsmittel (18a, 18b) definierten vorgegebenen Bewegungsbahn linear bewegbar ist, und
- ein Bewegungsmittel, das zum Antreiben des Beförderungsmittels (14) in der Weise angepasst ist, dass es sich entlang der vorgegebenen Bewegungsbahn linear bewegt,
wobei das Beförderungsmittel (14) des Weiteren einen Schließabschnitt (2) aufweist, der Halteabschnitt (5) und der Schließabschnitt (2) hintereinander entlang der vorgegebenen Bewegungsbahn angeordnet sind, die Hebevorrichtung (11) angepasst ist, um in einem Flugzeug (10), das einen ersten Bereich (12) und einen zweiten Bereich (13) aufweist, die durch eine Bodenstruktur (1) mit einer Öffnung (8) voneinander getrennt sind, in einer solchen Weise montiert zu werden, dass die vorgegebene Bewegungsbahn sich durch die Öffnung (8) erstreckt, und wobei das Beförderungsmittel (14) wahlweise entlang der vorgegebenen Bewegungsbahn zwischen einer ersten Position, in der der Schließabschnitt (2) in einem Abstand zu der Bodenstruktur (1) und der Öffnung (8) angeordnet ist und zumindest ein Teil des Halteabschnitts (5) zwischen der Bodenstruktur (1) und dem Schließabschnitt (2) angeordnet ist, und einer zweiten Position bewegbar ist, in der das Schließteil (2) die Öffnung (8) schließt.

2. Hebevorrichtung nach Anspruch 1, bei der der Schließabschnitt (2) eine ringförmig geschlossene Kontaktfläche aufweist, die dem Halteabschnitt (5) zugewandt und angepasst ist, um in dem montierten Zustand der Hebevorrichtung (11) an einem ringförmig geschlossenen Abschnitt einer Bodenstruktur (1) anzuliegen, der die Öffnung (8) umgibt, wenn sich das Beförderungsmittel (14) in der zweiten Position befindet.

3. Hebevorrichtung nach Anspruch 1 oder Anspruch 2, bei der der Schließabschnitt ein plattenförmiges Element (2) ist oder aufweist, das sich in einer Ebene erstreckt, die zu der vorgegebenen Bewegungsbahn senkrecht ist.

4. Hebevorrichtung nach einem der vorhergehenden Ansprüche, bei der der Halteabschnitt(5) ein Greifmittel (5) aufweist, das angepasst ist, um zu transportierende Gegenstände (6) wahlweise zu greifen und freizugeben.

5. Hebevorrichtung nach einem der vorhergehenden Ansprüche, bei der der Schließabschnitt (2) eine Dichtungsanordnung aufweist, die angepasst ist, um eine luftdichte Dichtung und/oder eine Feuerbarriere bereitzustellen, wenn der Schließabschnitt (2) eine Öffnung (8) in einer Bodenstruktur (1) schließt.

6. Hebevorrichtung nach einem der vorhergehenden Ansprüche, die des Weiteren einen Rahmen aufweist, der eine Öffnung (8) definiert und angepasst ist, um in einer Öffnung in einer Bodenstruktur (1) befestigt zu werden, die einen ersten Bereich (12) und einen zweiten Bereich (13) eines Flugzeugs (10) voneinander trennt, wobei die Öffnung (8) des Rahmens kleinere Abmessungen als der Schließabschnitt (2) hat, so dass der Schließabschnitt (2) in eine Position bewegbar ist, in der der Schließabschnitt (2) an einem ringförmig geschlossenen Abschnitt der Bodenstruktur (1) anliegt, die die Öffnung (8) umgibt, wodurch die Öffnung (8) geschlossen wird.

7. Hebevorrichtung nach einem der vorhergehenden Ansprüche, die des Weiteren ein Monument aufweist, das einen geraden länglichen Hohlraum aufweist, der an einem seiner längs gerichteten Enden in Richtung auf das Äußere des Monuments offen ist und eine Längsachse definiert, wobei das Führungsmittel (18a, 18b) an dem Monument montiert ist, das Beförderungsmittel (14) zumindest teilweise innerhalb des Hohlraums angeordnet ist und die Hebevorrichtung (11) zum Transportieren von Objekten (6) von außenhalb des Monuments entlang der Längsachse des Hohlraums durch sein offenes Ende in den Hohlraum angepasst ist, wobei das Monument angepasst ist, um an einer Bodenstruktur (1) eines Flugzeugs (10) montiert zu werden, die einen ersten Bereich (12) und einen zweiten Bereich (13) des Flugzeugs (10) voneinander trennt, so dass die Längsachse senkrecht zu der Bodenstruktur (1) ausgerichtet ist und das offene Ende des Hohlraums der Bodenstruktur (1) zugewandt ist, wobei das Führungsmittel (18a, 18b) und die vorgegebene Bewegungsbahn sich parallel zu der Längsachse des Hohlraums erstrecken.

8. Hebevorrichtung nach einem der vorhergehenden Ansprüche, bei der das Bewegungsmittel mindestens ein Antriebsmittel (3a, 3b) zum Antreiben des Beförderungsmittels (14) und mindestens ein Bremsmittel (3a, 3b) aufweist, das angepasst ist, um das Beförderungsmittel (14) wahlweise in seiner Position zu blockieren und es freizugeben, um durch das mindestens eine Antriebsmittel (3a, 3b) bewegbar zu sein, wobei das mindestens eine Antriebsmittel (3a, 3b) und das mindestens eine Bremsmittel (3a, 3b) in der Weise angepasst sind, dass im Fall von Energieverlust das mindestens eine Bremsmittel (3a, 3b) automatisch freigegeben wird und das mindestens eine Antriebsmittel (3a, 3b) einer Bewegung des Beförderungsmittels (14) entlang dem Führungsmittel (18a, 18b) unter dem Einfluss von Schwerkraft nicht entgegenwirkt.

9. Hebevorrichtung nach einem der vorhergehenden Ansprüche, bei der
- das Führungsmittel zwei oder mehrere gerade Führungselemente (18a, 18b) aufweist, die voneinander beabstandet angeordnet sind,
und
- das Beförderungsmittel (14) zwei oder mehrere Beförderungselemente (20a, 20b) aufweist, eines für jedes der Führungselemente (18a, 18b) und jedes so an einem unterschiedlichen der Führungselemente (18a, 18b) montiert, dass sie entlang des entsprechenden Führungselements (18a, 18b) linear bewegbar sind.

10. Flugzeug (10), das aufweist:
einen ersten Bereich (12),
einen zweiten Bereich (13),
eine Bodenstruktur (1), die den ersten und den zweiten Bereich (12, 13) voneinander trennt und eine Öffnung (8) hat, und
eine Hebevorrichtung (11) nach einem der vorhergehenden Ansprüche, wobei
- die Hebevorrichtung (11) in der Weise in dem Flugzeug (10) befestigt ist, dass sich die vorgegebene Bewegungsbahn durch die Öffnung (8) zwischen dem ersten Bereich (12) und dem zweiten Bereich (13) erstreckt,
- die Öffnung (8) kleinere Abmessungen als der Schließabschnitt (2) hat, so dass der Schließabschnitt (2) in der Lage ist, die Öffnung (8) vollständig abzudecken und zu schließen, und das Beförderungsmittel (14) und das Führungsmittel (18a, 18b) angepasst und angeordnet sind, um einen Transport von Objekten (6) durch die Öffnung (8) zwischen dem ersten und dem zweiten Bereich (12, 13) zu ermöglichen, während die Objekte (6) durch den Halteabschnitt(5) festgehalten werden, und
- das Beförderungsmittel (14) entlang der vorgegebenen Bewegungsbahn zwischen einer ersten Position, in der der Schließabschnitt (2) von der Bodenstruktur (1) und der Öffnung (8) beabstandet angeordnet ist und zumindest ein Teil des Halteabschnitts (5) zwischen der Bodenstruktur (1) und dem Schließabschnitt (2) angeordnet ist, und einer zweiten Position bewegbar ist, in der der Schließabschnitt (2) die Öffnung (8) schließt.

11. Flugzeug nach Anspruch 10, bei dem der erste Bereich (12) eine Passagierkabine ist und der zweite Bereich (13) ein Frachtraum ist.

12. Flugzeug nach Anspruch 10 oder Anspruch 11, bei dem die zweite Position die niedrigste mögliche Position des Beförderungsmittels (14) entlang der vorgegebenen Bewegungsbahn ist.

13. Flugzeug nach Anspruch 12, bei dem das Bewegungsmittel so angepasst ist, dass sich im Fall eines Energieverlusts das Beförderungsmittel (14) in die zweite Position bewegt oder unter dem Einfluss von Schwerkraft in der zweiten Position gehalten wird.

14. Flugzeug nach Anspruch 13, bei dem die Hebevorrichtung (11) eine Hebevorrichtung nach Anspruch 8 ist.

15. Flugzeug nach einem der Ansprüche 10 bis 14, bei dem der Schließabschnitt (2) und die Bodenstruktur (1) zusammenwirkende Verriegelungsmittel zum wahlweisen mechanischen Verriegeln des Schließabschnitts (2) in der zweiten Position aufweisen.

## Revendications

1. Un appareil de levage pour transporter des objets (6) entre un premier compartiment (12) d'un aéronef (10) et un second compartiment (13) de l'aéronef (10) à travers une ouverture (8) dans une structure de plancher (1) séparant le premier compartiment (12) et le second compartiment (13) l'un de l'autre, l'appareil de levage (11) comprenant :
- un moyen de transport (14) comprenant une partie de retenue (5) adaptée pour retenir et libérer sélectivement des objets (6) devant être transportés,
- un moyen de guidage (18a, 18b) auquel le moyen de transport (14) est monté de manière à pouvoir se déplacer linéairement d'une manière guidée le long d'un trajet de mouvement prédéterminé défini par le moyen de guidage (18a, 18b), et
- un moyen de déplacement adapté pour entraîner le moyen de transport (14) pour se déplacer linéairement le long du trajet de mouvement prédéterminé,
dans lequel le moyen de transport (14) comprend en outre une partie de fermeture (2), la partie de retenue (5) et la partie de fermeture (2) sont disposées l'une après l'autre le long du trajet de mouvement prédéterminé, l'appareil de levage (11) est adapté pour être monté dans un aéronef (10), qui comprend un premier compartiment (12) et un second compartiment (13) séparés l'un de l'autre par une structure de plancher (1) ayant une ouverture (8), de telle manière que le trajet de mouvement prédéterminé s'étend à travers l'ouverture (8), et dans lequel le moyen de transport (14) est sélectivement mobile le long du trajet de mouvement prédéterminé entre une première position, dans laquelle la partie de fermeture (2) est espacée de la structure de plancher (1) et de l'ouverture (8) et au moins une partie de la partie de retenue (5) est disposée entre la structure de plancher (1) et la partie de fermeture (2), et une seconde position, dans laquelle la partie de fermeture (2) ferme l'ouverture (8).

2. L'appareil de levage selon la revendication 1, dans lequel la partie de fermeture (2) comprend une surface de contact fermée de manière annulaire, qui fait face à la partie de retenue (5) et est adaptée pour venir en butée, dans l'état monté de l'appareil de levage (11), une partie fermée de manière annulaire d'une structure de plancher (1) entourant l'ouverture (8) lorsque le moyen de transport (14) se trouve dans la seconde position.

3. L'appareil de levage selon la revendication 1 ou la revendication 2, dans lequel la partie de fermeture est ou comprend un élément en forme de plaque (2) qui s'étend dans un plan qui est perpendiculaire au trajet de mouvement prédéterminé.

4. L'appareil de levage selon l'une quelconque des revendications précédentes, la partie de retenue (5) comprenant un moyen de préhension (5) qui est adapté pour saisir et libérer sélectivement des objets (6) devant être transportés.

5. L'appareil de levage selon l'une quelconque des revendications précédentes, la partie de fermeture (2) comprenant un agencement d'étanchéité qui est adapté pour fournir un joint d'étanchéité à l'air et/ou une barrière coupe-feu lorsque la partie de fermeture (2) ferme une ouverture (8) dans une structure de plancher (1).

6. L'appareil de levage selon l'une quelconque des revendications précédentes comprenant en outre un cadre définissant une ouverture (8) et étant adapté pour être monté dans une ouverture dans une structure de plancher (1) séparant un premier compartiment (12) et un second compartiment (13) d'un aéronef (10) l'un de l'autre, l'ouverture (8) du cadre présentant des dimensions inférieures à celles de la partie de fermeture (2) de telle sorte que la partie de fermeture (2) est mobile dans une position dans laquelle la partie de fermeture (2) vient buter contre une partie fermée de manière annulaire de la structure de plancher (1) entourant l'ouverture (8), fermant ainsi l'ouverture (8).

7. L'appareil de levage selon l'une quelconque des revendications précédentes, comprenant en outre un édifice comprenant une cavité allongée droite ouverte à l'une de ses extrémités longitudinales vers l'extérieur de l'édifice et définissant un axe longitudinal, dans lequel le moyen de guidage (18a, 18b) est monté sur l'édifice, le moyen de transport (14) est disposé au moins partiellement à l'intérieur de la cavité, et l'appareil de levage (11) est adapté pour transporter des objets (6) depuis l'extérieur de l'édifice le long de l'axe longitudinal de la cavité à travers son extrémité ouverte dans la cavité, l'édifice étant adapté pour être monté sur une structure de plancher (1) d'un aéronef (10) séparant un premier compartiment (12) et un second compartiment (13) de l'aéronef (10) l'un de l'autre de telle sorte que l'axe longitudinal est orienté perpendiculairement à la structure de plancher (1) et l'extrémité ouverte de la cavité est tournée vers la structure de plancher (1), le moyen de guidage (18a, 18b) et le trajet de mouvement prédéterminé s'étendant parallèlement à l'axe longitudinal de la cavité.

8. L'appareil de levage selon l'une quelconque des revendications précédentes, dans lequel le moyen de déplacement comprend au moins un moyen d'entraînement (3a, 3b) pour entraîner le moyen de transport (14) et au moins un moyen de freinage (3a, 3b) adapté pour verrouiller sélectivement le moyen de transport (14) dans sa position et le libérer pour être mobile par le ou les moyens d'entraînement (3a, 3b), dans lequel le ou les moyens d'entraînement (3a, 3b) et le ou les moyens de freinage (3a, 3b) sont adaptés de telle sorte qu'en cas de perte de puissance, le ou les moyens de freinage (3a, 3b) sont automatiquement libérés et le ou les moyens d'entraînement (3a, 3b) ne résistent pas au mouvement du moyen de transport (14) le long des moyens de guidage (18a, 18b) sous l'influence de la gravité.

9. L'appareil de levage selon l'une quelconque des revendications précédentes, dans lequel
- le moyen de guidage comprend au moins deux éléments de guidage droits (18a, 18b) qui sont espacés l'un de l'autre, et
- le moyen de transport (14) comprend au moins deux éléments de transport (20a, 20b), un pour chacun des éléments de guidage (18a, 18b) et chacun étant monté sur un élément différent des éléments de guidage (18a 18b) de telle sorte qu'ils sont mobiles linéairement le long de l'élément de guidage respectif (18a, 18b).

10. Un aéronef (10)comprenant :
Un premier compartiment (12),
un second compartiment (13),
une structure de plancher (1) séparant les premier et second compartiments (12, 13) l'un de l'autre et ayant une ouverture (8), et
un appareil de levage (11) selon l'une quelconque des revendications précédentes, dans lequel
- l'appareil de levage (11) est monté dans l'aéronef (10) de telle sorte que le trajet de mouvement prédéterminé s'étend à travers l'ouverture (8) entre le premier compartiment et le second compartiment (13),
- l'ouverture (8) a des dimensions plus petites que la partie de fermeture (2), de telle sorte que la partie de fermeture (2) est apte à recouvrir et à fermer complètement l'ouverture (8), et le moyen de transport (14) et le moyen de guidage (18a, 18b) sont adaptés et agencés pour permettre le transport d'objets (6) à travers l'ouverture (8) entre les premier et second compartiments (12, 13) pendant que les objets (6) sont retenus par la partie de retenue (5), et
- le moyen de transport (14) est mobile le long du trajet de mouvement prédéterminé entre une première position, dans laquelle la partie de fermeture (2) est espacée de la structure de plancher (1) et de l'ouverture (8) et au moins une partie de la partie de retenue (5) est disposée entre la structure de plancher (1) et la partie de fermeture (2), et une seconde position, dans laquelle la partie de fermeture (2) ferme l'ouverture (8).

11. L'aéronef selon la revendication 10, dans lequel le premier compartiment (12) est un compartiment passager et le second compartiment (13) est un compartiment à marchandises.

12. L'aéronef selon la revendication 10 ou la revendication 11, la deuxième position étant la position la plus basse possible du moyen de transport (14) le long du trajet de mouvement prédéterminé.

13. L'aéronef selon la revendication 12, le moyen de déplacement étant adapté de telle sorte qu'en cas de perte de puissance, le moyen de transport (14) se déplace dans la seconde position ou est maintenu dans la seconde position sous l'effet de la gravité.

14. L'aéronef selon la revendication 13, l'appareil de levage (11) étant un appareil de levage selon la revendication 8.

15. L'aéronef selon l'une quelconque des revendications 10 à 14, dans lequel la partie de fermeture (2) et la structure de plancher (1) comprennent des moyens de verrouillage coopérant pour verrouiller mécaniquement de manière sélective la partie de fermeture (2) dans la seconde position.
